# EUROPÄISCHE PATENTSCHRIFT

(11) **EP 0 417 446 B1**
(45) Veröffentlichungstag und Bekanntmachung des Hinweises auf die Patenterteilung: **15.12.1993**
(21) Anmeldenummer: 90114475.8
(22) Anmeldetag: 27.07.1990
(51) Int. Cl.: B23B 5/18

(54) **3-Phasen-Kurbelwellenbearbeitung**
3-Phases crankshaft machining
Usinage de vilebrequin en 3 phases

(30) Priorität: 12.09.1989 DE 3930489
(43) Veröffentlichungstag der Anmeldung: 20.03.1991
(73) Patentinhaber: Boehringer Werkzeugmaschinen GmbH, D-73002 Göppingen (DE)
(72) Erfinder: Schrod, Hans, Dipl.-Ing. (FH), D-7320 Göppingen (DE); Voss, Wolf-Dietrich, Dipl.-Ing., D-7325 Boll (DE)
(74) Vertreter: Hansmann, Axel, Dipl.-Wirtsch.-Ing.

(56) Entgegenhaltungen:
- EP-A- 0 286 771
- AT-B- 286 067
- DE-A- 2 909 417
- DE-A- 3 125 195
- DE-A- 3 523 274
- DE-C- 848 137

## Beschreibung

Die vorliegende Erfindung betrifft das Bearbeiten des Lagerdruchmessers, insbesondere der Hauptlagerdurchmesser, sowie der angrenzenden Wangen-Seitenflächen an Kurbelwellen und ähnlichen Werkstücken.

Bei diesen Werkstücken wird nicht nur speziell an den Lagerdurchmessern eine möglichst hohe Fertigungspräzision sowohl der Rundheit als auch des Soll-Durchmessers angestrebt, sondern darüberhinaus auch, wie bei allen Großserien-Werkstücken eine möglichst kostengünstige Herstellung. Zur Erreichung dieser oftmals in den Auswirkungen divergierenden Zielsetzungen wurde in der Vergangenheit bereits jeweils das optimal erscheinende Bearbeitungsverfahren, also Drehen, Fräsen oder Schleifen, gewählt. Darüberhinaus ist es auch einleuchtend, daß ein häufiges Umspannen des Werkstückes während der Bearbeitung durch kleine Differenzen bei der Neueinspannung zu Fertigungsungenauigkeiten und Zeitverlust führt, so daß die Fertigbearbeitung in einer einzigen Aufspannung angestrebt wird, z.B. durch Fräsen gemäß der DE-A-29 09 417. Dort werden mit Scheibenfräsern nicht nur die beiden jeweils gegenüber liegenden Wangen-Seiten-Flächen einer Lagerfläche, sondern auch die Lagerfläche selbst in ihrer gesamten Breite mittels Scheibenfräser bearbeitet.

Weiterhin ist aus der Anmeldung P 35 23 274 auch bereits das sogenannte Drehräumen bekannt, wobei sich ein scheibenförmiges Räumwerkzeug, auf dessen Umfang Schneiden angeordnet sind, während der Bearbeitung langsam drehend gegenüber dem schnelldrehende Werkstück befindet, und dessen Umfangsfläche bearbeitet. Dabei kann die Zustellbewegung entweder dadurch erfolgen, daß die einzelnen Schneiden auf der Umfangsfläche des Drehräumwerkzeuges zunehmenden Abstand vom Mittelpunkt dieses Werkzeuges besitzen. Die Zustellbewegung kann aber auch dadurch realisiert sein, daß alle Schneiden gleichen Abstand vom Werkzeugmittelpunkt besitzen und die Zustellbewegung durch eine radiale Bewegung des gesamten Werkzeuges auf das Werkstück zu durchgeführt wird. Mit diesem sogenannten Drehräumen lassen sich höhere Genauigkeiten bei der Herstellung der Lagerdurchmsser erzielen als mit dem normalen Drehen. Allerdings ist die Anzahl der Schneiden des Drehräumwerkzeuges durch den Umfang des Werkzeuges beschränkt, so daß nur begrenzte radiale Aufmaße des Werkstückes abgenommen werden können.

Infolgedessen hat sich zur Fertigbearbeitung von Kurbelwellen in letzter Zeit eine Kombination des Drehens und Drehräumens, durchgeführt auf einer einzigen Werkzeugmaschine, durchgesetzt: Dabei befinden sich auf dem Werkzeug, welches um eine zur Werkstücklängsachse parallele Achse schwenkbar ist, sowohl Schneiden, die zum Einstechdrehen eingesetzt werden, als auch Schneiden, die zum Drehräumen eingesetzt werden. Im einfachsten Fall befindet sich auf diesem Werkzeug ein Einstech-Drehmeißel, der die Breite des gesamten zu bearbeitenden Lagerdurchmessers besitzt und eine Drehräum-Schneide, die ebenfalls die gesamte Breite des herzustellenden Lagerdurchmssers besitzt. Mit dem Einstechdrehmeißel - der in der Praxis normalerweise schmaler ist als die Längserstreckung des Lagerdurchmessers, um Rattern zu vermeiden - wird zunächst der Lagerdurchmsser vom ursprünglichen hohen Aufmaß aus abgedreht bis auf ein sehr geringes Aufmaß in der Größenordnung von etwa 1/10 mm. Anschließend wird das Werkzeug vom Werkstück zurückgezogen und unter Beibehaltung einer hohen Drehzahl des Werkstückes in der Größenordnung von etwa 1000 Umdrehungen/Minute die Drehräum-Schneide des schwenkbaren Werkzeuges bogenförmig in den herzustellenden Lagerdurchmsser eingeschwenkt, und die Schwenkbewegung besitzt eine solche Geschwindigkeit, daß die Drehräum-Schneide über mehr als eine, meist etwa zwei, Umdrehungen des Werkstückes im Eingriff bleibt. Mit dieser Drehräumbearbeitung wird der Lagerdurchmsser der Kurbelwelle soweit fertig bearbeitet, daß auf ein Vorschleifen verzichtet werden kann und nur noch das Fertigschleifen erfolgt.

Dieser Bearbeitung vorgeschaltet ist die meist ebenfalls noch nicht durchgeführte Bearbeitung der Seitenflächen der Wangen, die durch Plandrehen mittels eines Drehmeißels geschieht.

Zusätzlich müssen Einstiche oder gar Hinterstiche etc., die beispielsweise in den Wangen-Seitenflächen in der Nähe des Lagerdurchmessers benötigt werden, durch Planeinstechen oder Drehräumen etc. hergestellt werden. Die Meißel hierfür sind ebenfalls in dem schwenkbaren Werkzeug integriert.

Obwohl sich mittels herkömlichem Drehen ein schnellerer Bearbeitungsfortschritt insbesondere beim Einstechen erzielen läßt als beim eine gute Oberfläche lieferden Drehräumen, ist - besonders bei Abnahme großer Materialmengen - das Fräsen meist noch schneller, liefert allerdings ein wesentlich schlechteres Oberflächenbild als das Drehräumen und auch als das normale Drehen.

Hiervon ausgehend ist es die Aufgabe der Erfindung, ein Verfahren sowie eine Vorrichtung zu dessen Durchführung zu schaffen, mittels denen Wangenseitenflächen sowie Lagerdurchmesser an Kurbelwellen schnell und dennoch mit hoher Fertigungsqualität hergestellt werden können.

Es werden nur geringe Anforderungen an die Bearbeitungsqualität der Seitenflächen der Wangen gestellt. Gleichzeitig muß dort nicht nur der größte radiale Bearbeitungsfortschritt durchgeführt werden, sondern gleichzeitig fällt dort auch das meiste abzunehmende Material an.

Die vorstehende Aufgabe wird daher durch die kennzeichnenden Merkmale der Ansprüche 1 und 2 gelöst.

Dabei wird zunächst die an den Lagerdurchmsser angrenzende Wangen-Seitenfläche oder gar beide angrenzenden Wangen-Seitenflächen je nach Stabilität des Werkstückes gleichzeitig, mittels beispielsweise eines scheibenförmigen Außenfräsers bearbeitet, der sich langsam von der Außenkante der Wangen zum Lagerdurchmesser hin vorarbeitet. Je nach Dimensionierung des Fräswerkzeuges und der zu bearbeitenden Wange steht dabei das Werkstück zumindest am Anfang still und wird sich ggf. nach Erreichen der gewünschten radialen Zustelltiefe langsam weiterdrehen, um einen Bearbeitungsfortschritt in Drehrichtung der Kurbelwelle entlang der Wangenseitenfläche zu erzielen. Dazu ist natürlich ein sog. C-Achs-Antrieb, also ein Drehlage-gesteuerter Antrieb des Werkstückes notwendig.

Ist ein solcher nicht vorhanden, aber statt dessen, wie im Ausführungsbeispiel dargestellt, die Y-Achse für die Fräseinheit realisiert, so genügt es, die Wange direkt auf die Fräseinheit auszurichten und diese gegen den Lagerdurchmsser vorarbeiten zu lassen. Dadurch verbleiben nach Erreichen der Soll-Frästiefe Reste an abzunehmendem Material der Wangen-Seitenwand neben dem Scheibenfräser. Um diese zu verkleinern, wird nun die Fräseinheit beidseitig in Y-Richtung verfahren. Dadurch werden die Reste zwar nicht vollständig beseitigt, sind aber klein genug, um die Funktion des Werkstückes nicht zu beeinträchtigen.

Auch für die Bearbeitung der Lagerdurchmsser ist dies nicht störend, da die Seitenflächen der Wangen ohnehin gegenüber den äußeren Begrenzungen der Lagerdurchmsser in Längsrichtung noch weiter zurückstehen. Aufgrund dessen kann auch die Bearbeitungsreihenfolge so gewählt werden, daß zuerst die Lagerdurchmesser durch Drehen und Drehräumen bearbeitet werden, bevor die Wangen-Seitenflächen durch Fräsen bearbeitet werden.

Nach Beendigung dieses Bearbeitungsschrittes wird das Fräswerkzeug vom Werkstück zurückgezogen und das bereits bekannte, kombinierte Dreh/Drehräumwerkzeug zum Einsatz gebracht, mittels welchem in an sich bekannter Weise die Lagerdurchmesser selbst fertigbearbeitet und ggf. noch benötigte Einstiche etc. in den Wangen-Seitenflächen etc. erstellt werden.

Während dieser Bearbeitung bleibt das Werkstück selbstervständlich fest eingespannt, wobei es hauptsächlich von der Stabilität des Werkstückes abhängt, ob diese Einspannung beidseitig durch drehantreibbare Futter oder einseitig nur durch eine Zentrierspitze geschieht.

Um auf diese Art und Weise ohne Umspannen eine Kurbelwelle fertigbearbeiten zu können, müssen sowohl die Fräseinheit als auch die kombinierte Dreh/Drehräumeinheit jeweils unabhängig mindestens in X-Richtung verfahrbar sein, ohne sich gegenseitig zu behindern. Sollen damit der Reihe nach mehrere Lagerstellen an einer Kurbelwelle bearbeitet werden, so ist zusätzlich eine Bewegungsmöglichkeit dieser Bearbeitungseinheiten auch in Z-Richtung notwendig.

Vorteilhafterweise erfolgt nun die Anordnung der beiden Bearbeitungseinheiten bezüglich des Werkstückes diametral gegenüber, wobei zusätzlich die X-Richtung senkrecht gewählt wird, um hierdurch einerseits einen guten Spänefall und andererseits eine gute Beobachtungsmöglichkeit des Bearbeitungsfortschrittes zu gewährleisten.

Die senkrechte Verfahrbarkeit der beiden Bearbeitungseinheiten oberhalb und unterhalb des Werkstückes läßt sich mit unterschiedlichen Bettformen realisieren, die sich hinsichtlich der Anordnung der Führungsebenen für die Verschiebung der Bettschlitten in der Z-Richtung, auf denen die Bearbeitungseinheiten montiert sind, unterscheiden.

Vorteilhafterweise wird hierfür jedoch ein Maschinenbett verwendet, welches in an sich bekannter Weise aus einem Bettunterteil, beispielsweise aus Polymerbeton, und einem metallenen Bettoberteil besteht, wobei am Bettoberteil zwei getrennte, winklig zueinander angeordnete Führungsebenen zum Führen einzelnder Komponenten in Z-Richtung vorgesehen sind. In jeder der beiden Führungsebenen kann ein Bettschlitten geführt werden, auf dem jeweils eine Bearbeitungseinheit montiert ist.

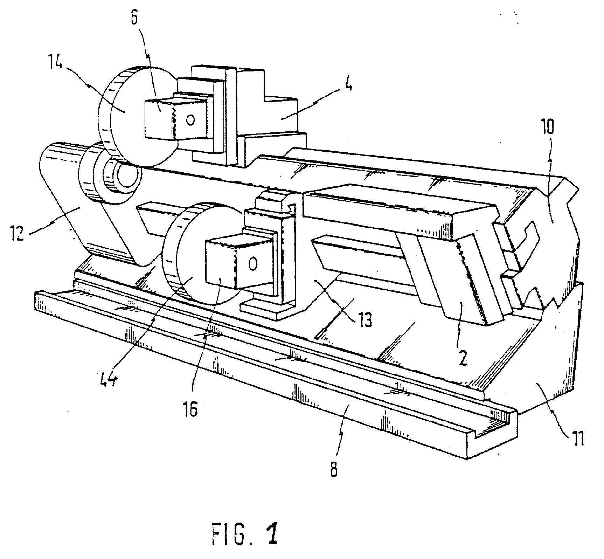

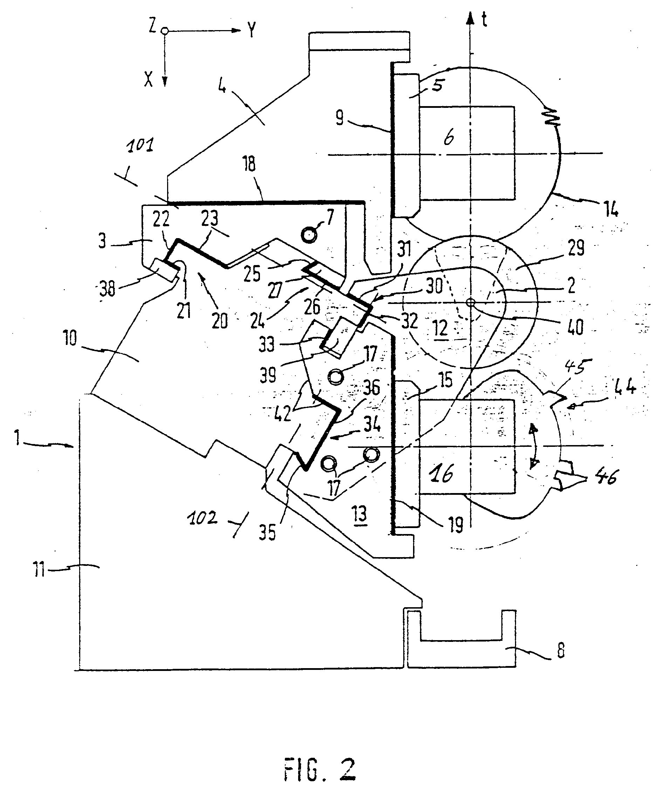

Das Bettoberteil weist dabei eine Gestalt auf, wie sie aus der Anmeldung P 39 21 649 bekannt ist: Die beiden Führungsebenen sind rechtwinklig zueinander angeordnet, wobei die erste, obere Führungsebene vom hinteren Bereich der Drehmaschine nach vorne, zum Bediener hin, abfällt und die zweite Führungsebene sich von der Vorderkante der ersten Führungsebene aus nach unten und hinten erstreckt und dadurch einen Überhang bildet. Weiterhin sind bis auf die oberste Führungsfläche der zweiten Führungsebene alle Führungsflächen so steil oder gar überhängend, daß sich hierauf keine Metallspäne ablagern können. Die Führungsflächen der ersten Führungsebene liegen alle oberhalb des Drehmittelpunktes. Die einzelnen Führungen weisen dabei teilweise mehrere Führungsflächen auf, von denen jeweils eine immer parallel zur jeweiligen Führungsebene liegt, zu der die entsprechende Führung gehört. Ferner besitzt die zweite Führungsebene eine Führung, die zwei Führungsflächen aufweist, die jeweils zu einer der beiden Führungsebenen parallel ist. Diese Führung liegt in der Nähe des Kreuzungspunktes der beiden theoretischen Führungsebenen. Der genannten Anmeldung sind im einzelnen auch die Vorteile dieser Bettform zu entnehmen, nämlich grob gesagt ein ungehinderter Spänefall, der jedoch nicht mit dem Nachteil weit in der Waagerechten vom Bett auskragender Bearbeitungseinheiten und der sich dadurch bereits durch die Gewichtskraft ergebenden Drehmomente erkauft werden muß. Aufgrund dieser Bettform kann auch eine zusätzliche Bewegungsmöglichkeit in Y-Richtung vorgesehen werden, die allein für die beschriebene Bearbeitung einer Kurbelwelle zwar nicht unbedingt notwendig ist, jedoch die Herstellung zusätzlicher Einzelheiten am Werkstück erschließt. Eine Ausführungsform einer Werkzeugmaschine zur Durchführung des beschriebenen Verfahrens wird im folgenden beispielhaft anhand der Figuren 1 und 2 dargestellt. Es zeigt:
- Fig. 1: eine perspektivische Gesamtdarstellung der Werkzeugmaschine ohne Werkstück, und
- Fig. 2: eine Querschnittsdarstellung durch die Werkzeugmaschine der Fig. 1

An der auf der rechten Seite der Fig. 1 zu erkennenden Stirnseite des Bettes 1 ist die Unterteilung in das meist aus Beton bestehende Bettunterteil 11, welches etwa dreieckigen Querschnitt besitzt, und das darauf aufgesetzte, aus Metall bestehende Bettoberteil 10 zu sehen, welches etwa rechteckigen Querscbnitt besitzt. Dieses Bettoberteil 10 mit seinem rechteckigen Querschnitt ist jedoch schräg gestellt, so daß seine obere Fläche schräg nach vorne, also zum Bediener der Werkzeugmaschine hin, geneigt ist.

Auf dieser Oberfläche des Bettoberteils 10 ist eine der beiden Bearbeitungseinheiten der Werkzeugmaschine geführt. Hierzu ist ein Bettschlitten 3 auf der oberen Fläche des Bettoberteils in Maschinenlängsrichtung, also in Z-Richtung, verfahrbar. Auf diesem Bettschlitten 3 ist ein Obersupport 4 waagerecht quer zur Z-Richtung auf den Bediener zu bzw. von diesem weg verfahrbar, wodurch auch die Y-Achse der Werkzeugmaschine realisiert ist.

Die X-Achse der Werkzeugmaschine ist durch einen Planschlitten 5 verwirklicht, welcher am Obersuppport 4 in der Senkrechten verfahrbar ist. An diesem Planschlitten 5 ist die Fräseinheit 6 befestigt, die den außenverzahnten Scheibenfräser 14 trägt und antreibt. Dieser Scheibenfräser 14 ist in der Fig. 1 als einfache Scheibe dargestellt, und auch in Fig. 2 sind nur einige Zähne des Scheibenfräsers 14 symbolisch dargestellt.

Die Werkzeugmaschine umfaßt darüberhinaus noch den Spindelstock 12 sowie den Reitstock 2 für die Befestigung und den Antrieb der Kurbelwelle sowie eine weitere Bearbeitungseinheit, die jedoch beide an der überhängenden Vorderfläche des Bettoberteils 10 geführt werden. Da bei der zweiten Bearbeitungseinheit lediglich die X-Achse, dagegen nicht die Y-Achse verwirklicht ist, ist der Planschlittem 15 direkt senkrecht an dem Bettschlitten 13 befestigt.

Wie Fig. 2 zeigt, haben weder die untere Bearbeitungseinheit noch der Spindelstock 12 Berührung mit der schrägen Vorderfläche des Bettunterteiles 11, welche unter anderem zum Abführen der darauf fallenden Späne in den vor dem Bett 1 liegenden Späneförderer 8 dient, der schematisch in Form einer Rinne dargestellt ist.

In Fig. 2 sind zusätzlich zu den anhand der Fig. 1 erläuterten Baugruppen die einzelnen Führungen und Führungsflächen angegeben, auf denen die Relativverschiebung der einzelnen Komponenten zueinander erfolgt: Auf der Oberseite des Bettoberteiles 10 wird der Bettschlitten 3, der die Fräseinheit trägt, mittels zweier Führungen 20, 24 in Z-Richtung geführt. Jede dieser Führungen besteht aus mehreren Führungsflächen, wobei die Führungsflächen 21 und 23 der Führung 20 sowie die Führungsfläche 26 der Fuhrung 24 in Richtung der Führungsebene 101 liegen, also schräg nach vorne zum Bediener hin abfallen. Darüberhinaus weisen die beiden Führungen 20 und 24 jeweils eine Führungsfläche 22 bzw. 25 auf, die quer zur Richtung der übrigen Führungsflächen verlaufen. Auf diese Art und Weise bilden die Führungsflächen 22 und 23 der Fuhrung 20 ein nach oben aufragendes, dachförmiges Prisma, welches durch zusätzliche, an die Führungsfläche 22 anschließende und zur Führungsfläche 23 parallele Führungsflächen 21 zu einer U-förmigen Führung ergänzt wird. Zur Montage und Demontage des Bettschlittens 3 ist deshalb eine vom Bettschlitten 3 abnehmbare Leiste 38 notwendig, die diese U-förmige Führung 20 hintergreift und an der Führungsfläche 21 anliegt.

Bei der Führung 24 liegen die Führungsflächen im Gegensatz zu denjenigen der Führung 20 nicht jeweils im rechten Winkel zueinander, sondern die beiden Führungsflächen 25 und 26 liegen in einem spitzen Winkel zueinander und bilden somit praktisch eine halbe Schwalbenschwanzführung. Der Teil des Bettschlittens 3, der in diese Führung 24 eingreift, ist ebenfalls abnehmbar als Keilleiste 27 ausgebildet.

Der Antrieb des Bettschlittens erfolgt über die in Fig. 2 eingezeichnete Antriebsspindel 7.

Weiter ist in der Fig. 2 bei dieser oberen Werkzeugeinheit zu erkennen, daß trotz der geneigten Führungsebene 101, entlang der der Bettschlitten 3 auf dem Bettoberteil 10 verschoben wird, der auf diesem Bettschlitten 3 quer zur Längserstreckung der Maschine verfahrbare Obersupport 4 entlang einer waagerecht liegenden Führung 18 verschoben wird. An diesem Obersupport 4 wiederum ist der Planschlitten 5 senkrecht und in Richtung auf die Drehmitte 40 des Werkstückes zu bzw. von dieser weg verfahrbar.

Obwohl diese Realisierung der Y-Achse für die beschriebene Bearbeitung mittels Fräseinheit nicht notwendig ist, muß davon ausgegangen werden, daß diese Y-Achse in vielen Fällen dennoch bereits vorhanden ist, und zwar dann, wenn eine vorhandene Drehmaschine durch Austauschen einer Werkzeugeinheit gegen die Fräseinheit umgerüstet wird.

Senkrechter und waagerechter Verlauf von X- und Y-Achse erleichtern nicht nur ein Nachvollziehen der Werkzeugbewegungen durch den Bediener, sondern auch das immer mehr auf den Bediener übertragene Programmieren der Maschine.

Entsprechend der senkrecht gelegten X-Achse liegt genau unter dem Scheibenfräser 14 die zweite Bearbeitungseinheit, nämlich die kombinierte Dreh/Drehräumeinheit 44, wie durch die Linie t angedeutet. Der Bettschlitten 13, der die Dreh/Drehräumeinheit 44 in Z-Richtung bewegt, ist in der Führungsebene 102 oben an der Führungsfläche 33 und unten an der Führung 34 geführt, welche aus den zur Führungsebene 102 parallelen und überhängenden Führungsfläche 36 sowie der im rechten Winkel anschließenden Führungsfläche 42, sowie einer unten im spitzen Winkel anschließenden Führungsfläche 35 besteht, die z.B. durch PEKU-Elemente auf Anlage gehalten wird.

Sämtliche Führungsflächen dieser Führungen stehen hinter der am weitesten nach vorne ragenden oberen Vorderkante des Bettoberteiles 10 zurück und sind somit vor von oben herabfallenden Spänen, Werkzeugen und anderen Gegenständen geschützt. Die Antriebsspindeln 7 und 17 dienen zur Z-Bewegung der Bettschlitten.

Ferner sind in der Fig. 2 an der Dreh/Drehräumeinheit 44 schematisch sowohl der Dreh-Einstechmeißel $5 als auch zwei Drehräumschneiden 46 eingezeichnet. Falls es sich bei dem zu bearbeitenden Lagerdurchmsser um eine große Bearbeitungsbreite handelt, kann natürlich zur Vermeidung von Ratterbewegungen das Einstech-Drehen in mehreren Teilarbeitsschritten nebeneinander geschehen, entweder durch mehrmaliges Zurückziehen und Zustellen der Dreh/Drehräumeinheit 44 oder auch durch mehrere auf dieser Einheit 44 versetzt angeordnete Einstech-Drehmeißel 45, die jeweils zur Bearbeitung eines Teilbereiches vorgesehen sind.

Ebenso sind im vorliegenden Fall symbolisch zwei Drehraumschneiden 46 dargestellt, die zunehmenden Abstand vom Mittelpunkt der Dreh/Drehräumeinheit 44 aufweisen, so daß die Zustellbewegung hier in den zunehmenden Abstand der Schneiden gelegt ist. Selbstverständlich können bei entsprechend geringem abzunehmendem Aufmaß diese Drehräumschneiden bis auf eine einzige reduziert werden oder es können selbst bei mehreren vorhandenen Drehraumschneiden diese gleichen Abstand vom Mittelpunkt der Dreh/Drehräumeinheit haben, wobei dann die Zustellung durch eine X-Bewegung der Werkzeugträgereinheit 16 vorgenommen werden muß. Dabei muß die Zustellbewegung durchgeführt werden, wenn gerade keine der Drehräumschneiden 46 im Eingriff ist. Hierzu reicht aber beispielsweise bei einem Durchmesser der Dreh/Drehräumeinheit 44 von etwa 700 mm ein Schneidenabstand von bereits 9° aus.

Theoretisch könnte weiterhin für die Durchführung des Dreheinstechvorganges sowie des Drehräumvorganges ein und dieselbe Schneide benutzt werden. Da für beide Bearbeitungsvorgänge jedoch geringfügig geometrisch unterschiedlich gestaltete Schneiden jeweils zu einem optimalen Bearbeitungsergebnis führen, wird auf die Einschränkung auf lediglich eine einzige gemeinsame Schneide verzichtet. Die Fräseinheit 6 ist im vorliegenden Fall oberhalb der Drehmitte 40, also des Werkstückes 29 angeordnet, da die darunter liegende Dreh/Drehräumeinheit weniger anfällig dafür ist, daß durch von oben herunterfallende Späne beispielsweise ein Verklemmen des Einstech-Drehmeißels 45 mit dem Werkstück 29 geschieht. Bei umgekehrter Anordnung könnten dagegen leichter Späne in die Zwischenräume zwischen die Zähne des Scheibenfräsers 14 fallen und dort zu einem unbefriedigenden Bearbeitungsergebnis oder Beschädigen des Werkzeuges führen. Selbstverständlich können vor der Maschine weitere Leitbleche etc. angeordnet sein, um die vor der Maschine herabfallendne Späne dem Späneförderer zuzuführen, jedoch werden die meisten der kleinen, leicht herumfliegenden Späne beim Fräsen produziert, wobei man es durch Wahl der Drehrichtung in der Hand hat, daß diese Späne in Richtung der Maschine und nicht des Bedieners fliegen, wobei selbstverständlich die gesamte Maschine von einer Schutzabdeckung zum Schutz des Bedieners abgedeckt ist.

Darüberhinaus kann die Dreh/Drehräumeinheit noch weitere Einstech-Drehmeißel aufweisen, wie sie zur Einbringung notwendiger Einstiche etc. im Grenzbereich zwischen Lagerdurchmsser und Wangen-Seitenfläche notwendig sind.

Nach dieser Bearbeitung der Kurbelwelle kann auf ein sonst übliches Vorschleifen verzichtet werden, so daß lediglich noch ein Fertigschleifen der Lagerdurchmesser, also der Abtrag eines sehr geringen Aufmaßes, notwendig ist.

## Patentansprüche

1. Verfahren zum Fertigbearbeiten durch Fräsen, Drehen und Drehräumen der Lagerdurchmesser, insbesondere der Hauptlagerdurchmesser, sowie der angrenzenden Wangen-Seitenflächen einer Kurbelwelle in einer Aufspannung mit folgenden Verfahrensschritten nacheinander:
- Fräsen der Wangen-Seitenflächen in Z-Richtung auf Sollmaß bis nahe an den Soll-Lagerdurchmesser in X-Richtung,
- Drehen des Lagerdurchmessers bis zu einem geringen Aufmaß,
- Drehräumen der Lagerdurchmesser auf Sollmaß zur Erzielung einer guten Oberflächenqualität und
- Drehen/Drehräumen von Einstichen, Freistichen und Hinterstichen im Bereich der Lager.

2. Werkzeugmaschine zur Durchführung des Verfahrens nach Anspruch 1, wobei das Werkstück (29) drehantreibbar in der Werkzeug-Maschine gespannt ist und die Werkzeug-Maschine ein Maschinenbett mit wenigstens zwei Führungen aufweist, wobei jede Führung eine in Z-Richtung verfahrbare Bearbeitungseinheit (6, 44) aufweist, von denen wenigstens eine Bearbeitungseinheit ein Fräsaggregat (6) ist und wobei die Bearbeitungseinheiten in X-Richtung unabhängig voneinander bewegbar sind und die Werkzeug-Maschine einen C-Achs-Antrieb oder eine Y-Achs-Bewegung des Fräsaggregates aufweist,
**dadurch gekennzeichnet, daß**
die andere Bearbeitungseinheit eine kombinierte Dreh-Drehräum-Einheit (44) ist.

3. Werkzeugmaschine nach Anspruch 2,
dadurch **gekennzeichnet,** daß
die Fräseinheit wenigstens einen scheibenförmigen Außenfräser (14) aufweist.

4. Werkzeugmaschine nach Anspruch 2 oder 3,
dadurch **gekennzeichnet,** daß
die Dreh/Drehräumeinheit (44) außer einem Einstech-Drehmeißel (45) zum Drehen der Lagerdurchmesser auf der vollen Breite und einer Drehräumschneide (46) zum Drehräumen der Lagerdruchmesser auf der vollen Breite höchstens zusätzliche Drehmeißel zum Drehen von Nuten in den Wangen-Seitenflächen auf einem Werkzeugträger, der um eine zur Werkstücklängsachse parallele Achse schwenkbar ist, aufweist.

5. Werkzeugmaschine nach einem der Ansprüche 2 bis 4,
dadurch **gekennzeichnet,** daß
die Bearbeitungseinheiten sich bezüglich des Werkstückes (29) auf gegenüberliegenden Seiten befinden.

6. Werkzeugmaschine nach einem der Ansprüche 2 bis 5,
dadurch **gekennzeichnet,** daß
die Planschlitten (5,15) senkrecht entlang des Obersupportes (4) bzw Bettschlittens (13) quer zur Werkstücklängsachse verfahrbar sind.

7. Werkzeugmaschine nach einem der Ansprüche 3 bis 7,
dadurch **gekennzeichnet,** daß
die Werkzeugmaschine ein Maschinenbett mit zwei winklig zueinander liegenden Führungsebenen (101,102) in Z-Richtung aufweist, zu der mehrere, einzelne Führungsflächen aufweisende Führungen (20,30,34) gehören, wobei
- in jeder Führungsebene, zu der mehrere, einzelne Führungsflächen aufweisende Führungen gehören, wenigstens ein in Z-Richtung zu
verschiebbarer Bettschlitten (3,13) läuft, auf dem sich eine der in X-Richtung verschiebbaren Bearbeitungseinheiten befindet,
- die beiden Führungsebenen (101, 102) rechtwinklig zueinander liegen,
- die erste Führungsebene (101) vom hinteren Bereich der Drehmaschine aus nach vorne, also zur Bedienerseite hin, abfällt, und
- die zweite Führungsebene (102) sich vom vorderen Bereich der ersten Führungsebene (101) aus nach unten und hinten erstreckt und dabei einen Überhang bildet.

8. Werkzeugmaschine nach Anspruch 8
dadurch **gekennzeichnet,** daß
bis auf die oberste Führungsfläche (31) der zweiten Führungsebene (102) alle für den unteren Bettschlittenbenötigten Führungsflächen der zweiten Führungsebene (102) so steil stehen oder sogar überhängen, daß sich hierauf keine Metallspäne ablagern können.

9. Werkzeugmaschine nach einem der Ansprüche 7 oder 8, dadurch **gekennzeichnet,** daß
die zweite Führungsebene (102) eine Führung (30) mit zwei Führungsflächen (31, 32) aufweist, von denen die eine Führungsfläche (31) parallel zur ersten Führungsebene (101) und die andere Führungsfläche (32) parallel zur zweiten Führungsebene (102) liegt, und daß die zweite Führungsebene (102) wenigstens eine andere Führung (34) aufweist, zu der eine Führungsfläche (36) gehört, die parallel zur Führungsfläche (32) der Führung (30) liegt.

10. Werkzeugmaschine nach einem der Ansprüche 7 bis 9,
dadurch **gekennzeichnet,** daß
jede Führung (20, 24) bzw. (30, 34) einer bestimmten Führungsebene (101 bzw. 102) wenigstens eine zur jeweiligen Führungsebene (101 bzw. 102) parallele Führungsfläche (21, 23, 26 bzw. 32, 33. 36) aufweist.

11. Werkzeugmaschine nach einem der Ansprüche 7 bis 10,
dadurch **gekennzeichnet,** daß
alle Führungsflächen (21 bis 26) der ersten Führungsebene (101) höher liegen als die Führungsflächen (31 bis 36) der zweiten Führungsebene (102).

12. Werkzeugmaschine nach einem der Ansprüche 6 bis 11,
dadurch **gekennzeichnet,** daß
die Führungsflächen (31 und 32) der Führung (30) nahe beisammen liegen.

13. Werkzeugmaschine nach einem der Ansprüche 6 bis 12,
dadurch **gekennzeichnet,** daß
die Führungsfläche (26) der Führung (34) in einem möglichst großen Abstand von der ersten Führung (30) angeordnet ist.

14. Werkzeugmaschine nach einem der Ansprüche 6 bis 13,
dadurch **gekennzeichnet,** daß
das Bettoberteil (10) aus Guß besteht, welches mit dem aus Zementbeton bestehenden Bettunterteil (11) verklebt und zusätzlich mittels langer Dehnschrauben verschraubt wird, welche in so großen Bohrungen geführt sind, die mindestens doppelt so groß wie der Durchmesser der Drehschrauben sind.

15. Werkzeugmaschine nach einem der Ansprüche 6 bis 14,
dadurch **gekennzeichnet,** daß
zwischen dem Bettoberteil und dem Kopf der Dehnschrauben jeweils Rollkörper angeordnet sind, um einen Versatz des Bettoberteils gegenüber dem Bettunterteil und den dort verschraubten Dehnschrauben ohne zusätzliche Dehnung der Dehnschrauben zu ermöglichen.

## Claims

1. Process for finish-machining, by milling, turning and broaching, the bearing diameters, in particular the principal bearing diameters, and the adjoining web-side faces of a crankshaft in a clamping, having the following successive procedural steps:
- milling of the web-side faces in the Z-direction to a nominal size, up to close to the nominal bearing diameter in the X-direction,
- turning of the bearing diameter up to a small oversize,
- broaching of the bearing diameters to a nominal size in order to obtain good surface quality and
- turning/broaching of recesses, clearance cuts and undercuts in the region of the bearings.

2. Machine tool for realizing the process according to Claim 1, in which the workpiece (29) is clamped in such a way in the machine tool that it can be rotary driven and the machine tool exhibits a machine bed having at least two guides, each guide exhibiting a machining unit (6, 44) which can be transported in the Z-direction, of which at least one machining unit is a milling aggregate (6), and the machining units being able to be moved independently of one another in the X-direction and the machine tool exhibiting a C-axle drive or a Y-axis movement of the milling aggregate, characterized in that the other machining unit is a combined turning-broaching unit (44).

3. Machine tool according to Claim 2, characterized in that the milling unit exhibits at least one disc-shaped hollow mill (14).

4. Machine tool according to Claim 2 or 3, characterized in that the turning/broaching unit (44) exhibits at most, apart from a recess turning tool (45) for turning the bearing diameters over the full width and a broaching cutter (46) for broaching the bearing diameters over the full width, additional turning tools for turning grooves in the web-side faces on a tool carrier which is pivotable about an axis parallel to the longitudinal axis of the workpiece.

5. Machine tool according to one of Claims 2 to 4, characterized in that the machining units are located, in relation to the workpiece (29), on opposite sides.

6. Machine tool according to one of Claims 2 to 5, characterized in that the cross slide rests (5, 15) can be transported perpendicularly along the top slide (4) or saddle (13) transversely to the longitudinal axis of the workpiece.

7. Machine tool according to one of Claims 3 to 7, characterized in that the machine tool exhibits a machine bed having two guide planes (101, 102) in the Z-direc- tion, situated at an angle to each other, to which a plurality of guides (20, 30, 34) exhibiting individual guide faces belong, wherein
- in each guide plane to which a plurality of guides exhibiting individual guide faces belong, there runs at least one saddle (3, 13) which is displaceable in the Z-direction and on which there is located one of the machining units displaceable in the X-direction,
- the two guide planes (101, 102) lie at right-angles to each other,
- the first guide plane (101) slopes down from the rear region of the lathe towards the front, i.e. in the direction of the operator side, and
- the second guide plane (102) extends from the front region of the first guide plane (101) downwards and rearwards and herewith forms an overhang.

8. Machine tool according to Claim 8, characterized in that, apart from the uppermost guide face (31) of the second guide plane (102), all guide faces of the second guide plane (102) which are required for the lower saddle are so steeply angled, or even overhang, that no metal chips can be deposited thereon.

9. Machine tool according to one of Claims 7 or 8, characterized in that the second guide plane (102) exhibits a guide (30) having two guide faces (31, 32), of which the one guide face (31) lies parallel to the first guide plane (101) and the other guide face (32) lies parallel to the second guide plane (102), and in that the second guide plane (102) exhibits at least one other guide (34), to which a guide face (36) belongs which lies parallel to the guide face (32) of the guide (30).

10. Machine tool according to one of Claims 7 to 9, characterized in that each guide (20, 24) or (30, 34) of a specific guide plane (101 or 102) exhibits at least one guide face (21, 23, 26 or 32, 33, 36) parallel to the respective guide plane (101 or 102).

11. Machine tool according to one of Claims 7 to 10, characterized in that all guide faces (21 to 26) of the first guide plane (101) are situated higher than the guide faces (31 to 36) of the second guide plane (102).

12. Machine tool according to one of Claims 6 to 11, characterized in that the guide faces (31 and 32) of the guide (30) lie close together.

13. Machine tool according to one of Claims 6 to 12, characterized in that the guide face (26) of the guide (34) is disposed at the greatest possible distance from the first guide (30).

14. Machine tool according to one of Claims 6 to 13, characterized in that the top part (10) of the bed consists of cast iron, which adheres to the bottom part (11) of the bed consisting of cement concrete and is additionally screw-connected by means of long expansion screws, which are guided in suitably sized bores which are at least twice as large as the diameter of the expansion screws.

15. Machine tool according to one of Claims 6 to 14, characterized in that rolling elements are respectively disposed between the top part of the bed and the head of the expansion screws in order to enable the top part of the bed to be offset in relation to the bottom part of the bed and the expansion screws screwed in there without additional expansion of the expansion screws.

## Revendications

1. Procédé de finissage par fraisage, tournage et brochage par tournage des diamètres des paliers, en particulier des diamètres des paliers principaux, et des surfaces latérales des faces voisines d'un vilebrequin dans un montage, comportant les étapes de procédé successives suivantes :
- fraisage à la dimension nominale des surfaces latérales des faces dans la direction Z jusqu'à proximité du diamètre nominal des paliers dans la direction X,
- tournage du diamètre des paliers jusqu'à une faible surdimension,
- brochage par tournage des diamètres des paliers à la dimension nominale pour obtenir une bonne qualité de surface et
- tournage/brochage par tournage d'entailles, de gorges et de dépouilles dans le domaine des paliers.

2. Machine-outil pour la mise en oeuvre du procédé selon la revendication 1, dans laquelle la pièce à usiner (29) est serrée dans la machine-outil de manière à pouvoir être entraînée en rotation et la machine-outil comporte un banc de machine muni d'au moins deux glissières, chaque glissière comportant une unité d'usinage (6, 44) déplaçable dans la direction Z, au moins l'une des unités d'usinage étant une unité de fraisage (6), et dans laquelle les unités d'usinage sont déplaçables indépendamment l'une de l'autre dans la direction X et la machine-outil présente un entraînement suivant l'axe C ou un mouvement suivant l'axe Y de l'unité de fraisage, caractérisée en ce que l'autre unité d'usinage est une unité combinée de tournage et de brochage par tournage (44).

3. Machine-outil selon la revendication 2, caractérisée en ce que l'unité de fraisage comporte au moins une fraise externe (14) en forme de disque.

4. Machine-outil selon la revendication 2 ou 3, caractérisé en ce que l'unité de tournage et de brochage par tournage (44) comporte, en plus d'un outil de tournage pour entaillage (45) pour le tournage des diamètres des paliers sur toute la largeur et d'une lame de brochage par tournage (46) pour le brochage par tournage des diamètres des paliers sur toute la largeur, au plus des outils de tournage supplémentaires pour le tournage de rainures dans les surfaces latérales des faces sur un porte-outils qui peut pivoter autour d'un axe parallèle à l'axe longitudinal de la pièce à usiner.

5. Machine-outil selon l'une des revendications 2 à 4, caractérisée en ce que les unités d'usinage sont situées sur des côtés opposés par rapport à la pièce à usiner (29).

6. Machine-outil selon l'une des revendications 2 à 5, caractérisée en ce que les chariots transversaux (5, 15) sont déplaçables verticalement le long du support supérieur (4) ou du chariot longitudinal (13), transversalement à l'axe longitudinal de la pièce à usiner.

7. Machine-outil selon l'une des revendications 3 à 6, caractérisé en ce que la machine-outil comporte un banc de machine présentant deux plans de guidage (101, 102) formant entre eux un angle dans la direction Z, dans lesquels sont situées plusieurs glissières (20, 30, 34) présentant différentes surfaces de guidage, dans laquelle
- dans chaque plan de guidage dans lequel sont situées plusieurs glissières comportant différentes surfaces de guidage, s'étend dans la direction Z, près de chariots longitudinaux (3, 13) déplaçables, au moins une glissière sur laquelle se trouve l'une des unités d'usinage déplaçables dans la direction X,
- les deux plans de guidage (101, 102) sont perpendiculaires l'un à l'autre,
- le premier plan de guidage (101) est descendant depuis le domaine postérieur de la machine de tournage vers l'avant, c'est-à-dire vers le côté de l'opérateur, et
- le second plan de guidage (102) s'étend vers le bas et vers l'arrière depuis le domaine antérieur du premier plan de guidage (101) en formant ainsi un surplomb.

8. Machine-outil selon la revendication 7, caractérisée en ce que, jusqu'à la surface de guidage supérieure (31) du second plan de guidage (102), toutes les surfaces de guidage du second plan de guidage (102) qui sont nécessaires pour le chariot longitudinal inférieur sont si abruptes ou même en surplomb qu'aucun copeau métallique ne peut s'y déposer.

9. Machine-outil selon l'une des revendications 7 ou 8, caractérisée en ce que le second plan de guidage (102) comporte une glissière (30) présentant deux surfaces de guidage (31, 32) parmi lesquelles une surface de guidage (31) s'étend parallèlement au premier plan de guidage (101) et l'autre surface de guidage (32) s'étend parallèlement au second plan de guidage (102), et en ce que le second plan de guidage (102) comporte au moins une autre glissière (34) dont fait partie une surface de guidage (36) qui s'étend parallèlement à la surface de guidage (32) de la glissière (30).

10. Machine-outil selon l'une des revendications 7 à 9, caractérisée en ce que chaque glissière (20, 24) ou (30, 34) d'un plan de guidage (101 ou 102) déterminé comporte au moins une surface de guidage (21, 23, 26 ou 32, 33, 36) parallèle au plan de guidage (101 ou 102) correspondant.

11. Machine-outil selon l'une des revendications 7 à 10, caractérisée en ce que toutes les surfaces de guidage (21 à 26) du premier plan de guidage (101) sont situées plus haut que les surfaces de guidage (31 à 36) du second plan de guidage (102).

12. Machine-outil selon l'une des revendications 6 à 11, caractérisée en ce que les surfaces de guidage (31 et 32) de la glissière (30) sont proches l'une de l'autre.

13. Machine-outil selon l'une des revendications 6 à 12, caractérisée en ce que la surface de guidage (26) de la glissière (34) est disposée à la plus grande distance possible de la première glissière (30).

14. Machine-outil selon l'une des revendications 6 à 13, caractérisée en ce que la partie supérieure (10) du banc consiste en fonte, est collée et en outre vissée à la partie inférieure (11) du banc consistant en béton de ciment au moyen de longues vis à dilatation qui sont enfilées dans des alésages de taille telle qu'ils sont au moins deux fois plus grands que le diamètre des vis à dilatation.

15. Machine-outil selon l'une des revendications 6 à 14, caractérisée en ce qu'entre la partie supérieure du banc et la tête des vis à dilatation, il est prévu des galets pour permettre un déplacement de la partie supérieure du banc par rapport à la partie inférieure du banc et aux vis à dilatation qui y sont vissées, sans dilatation supplémentaire des vis à dilatation.
